Europäisches Patentamt

European Patent Office

Office européen des brevets

(19)

(11) EP 0 726 630 B1

(12) **FASCICULE DE BREVET EUROPEEN**

(45) Date de publication et mention
de la délivrance du brevet:
**27.10.1999 Bulletin 1999/43**

(51) Int Cl.6: **H02B 13/065**, H01H 33/56,
G01L 19/04

(21) Numéro de dépôt: **96400247.1**

(22) Date de dépôt: **06.02.1996**

(54) **Procédé et dispositif de détermination de la masse volumique d'un gaz d'isolement d'un appareil électrique**

Verfahren und Vorrichtung zur Bestimmung der Dichte eines Isoliergases in einer elektrischen Anlage

Method and device for determining the density of an insulating gas in an electrical apparatus

(84) Etats contractants désignés:
**AT CH DE ES FR GB IT LI SE**

(30) Priorité: **08.02.1995 FR 9501440**
**27.05.1995 FR 9505853**

(43) Date de publication de la demande:
**14.08.1996 Bulletin 1996/33**

(73) Titulaire: **GEC ALSTHOM T ET D SA**
**75016 Paris (FR)**

(72) Inventeurs:
• **Thuries, Edmond**
**F-69330 Meyzieu (FR)**

• **Dupraz, Jean-Pierre**
**F-69003 Lyon (FR)**

(74) Mandataire: **Gosse, Michel et al**
**ALSTOM France SA**
**Service de Propriété Industrielle**
**c/o CEGELEC**
**5, Avenue Newton**
**92142 Clamart Cédex (FR)**

(56) Documents cités:
DE-A- 2 607 158      DE-A- 2 714 384
DE-A- 3 428 322      DE-A- 3 910 696

Printed by Jouve, 75001 PARIS (FR)

# Description

La présente invention concerne un procédé et un dispositif pour la détermination de la masse volumique d'un gaz d'isolement d'un appareil électrique.

Les appareils électriques, tels que les disjoncteurs conventionnels sur colonnes isolantes en porcelaine ou en isolants synthétiques, ainsi que les postes sous enveloppe métalliques à la terre, dits postes blindés, utilisent souvent un gaz d'isolement à bonnes propriétés diélectriques, tel que l'hexafluorure de soufre, de formule chimique $SF_6$.

Les diverses caractéristiques de ces apareils, tels que le pouvoir de coupure ou la tenue diélectrique, dépendent de la densité du gaz d'isolement. Selon les normes, la démonstration de leur capacité d'interruption, leur tenue diélectrique, etc..., est effectuée au seuil minimal de masse volumique garantie par le constructeur, par exemple 30 kg/m$^3$ pour le $SF_6$.

Pour surveiller la masse volumique du gaz d'isolement et détecter le seuil minimal de bon fonctionnement, chaque appareil ou compartiment renfermant du gaz est équipé d'un appareil de mesure de la densité du gaz, appelé densimètre. Ces densimètres peuvent mettre en oeuvre des principes physiques différents, par exemple la variation de la fréquence d'oscillation d'un quartz ou la déformation d'une membrane associée à un calcul de compensation en température, ou encore la comparaison de pression avec un volume de référence rempli du même gaz. Cette liste n'est pas limitative.

Le bon fonctionnement de ces densimètres suppose qu'ils sont à la même température que le gaz dont ils sont censés mesurer la densité. Il est connu en effet que la masse volumique $\rho$ d'un gaz est liée à sa température T et à sa pression P par une relation:

$$\rho = F(T, P)$$

Tout pourcentage d'erreur sur T entraîne un pourcentage d'erreur égal sur $\rho$ à une pression P donnée.

Les densimètres sont installés d'une façon quasi générale, pour les disjoncteurs conventionnels sur colonnes isolantes, au pied des colonnes. A cet endroit, si la pression est sensiblement la même que dans les chambres de coupure puisque les pressions s'égalisent toujours dans des volumes en communication; la température y est, par contre, notablement plus basse que dans la chambre de coupure lorsque celle-ci est traversée par le courant nominal.

La situation est analogue pour les postes blindés. En effet, de façon quasi générale également, les densimètres sont installés à la surface extérieure des enveloppes métalliques. Ces enveloppes sont, de même que précédemment, notablement plus froides que les organes de coupure ou que les barres qu'elles contiennent. Un gradient de température s'établit en effet entre le centre des appareils et les parois extérieures. De même que précédemment, la même pression règne dans tout le volume, mais les températures étant différentes, le gaz ne présente pas la même densité partout. Elle est plus faible au centre vers les parties chaudes que vers l'extérieur.

A titre d'exemple, il est fréquent que dans une chambre de coupure de disjoncteur conventionnel, traversée par le courant de charge, la température du gaz à l'intérieur de cette chambre soit de 30° supérieure à la température ambiante. En prenant un température ambiante à 20°C, soit 293K, l'erreur sur la masse volumique mesurée est de 10% environ. Pour une pression de seuil de 5 bars à 20°C, l'erreur traduite en pression est de 500 millibars.

Quand on sait que les pouvoirs de coupure, en défaut de ligne par exemple, sont sensibles à des réglages de pression d'environ 100 millibars, et que pour tirer au plus juste le dimensionnement de leurs appareils, les constructeurs demandent des appareils de mesure de pression ayant une précision au moins égale en valeur absolue à 50 millibars, on voit qu'une erreur de 500 millibars est aberrante.

Les documents DE-A-3 428 322, DE-A-2 607 158 et DE-A-3 910 696 décrivent un procédé et un dispositif de surveillance des caractéristiques d'un gaz d'isolement dans une installation de commutation blindée du genre mentionné ci-dessus.

Un but de la présente invention est de définir un procédé de calcul de la densité d'un gaz dans une zone inaccessible d'un appareil électrique, avec une bonne précision, cohérente avec les cahiers des charges ou normes imposées.

L'invention a pour objet un procédé pour déterminer la masse volumique d'un gaz d'isolement d'un appareil électrique au voisinage des pièces parcourues par le courant, caractérisé en ce qu'il comprend les étapes suivantes:

a) on mesure une température de référence ($T_{réf}$) extérieure à l'appareil au voisinage de celui-ci,

b) on mesure le courant (IA, IB, IC) traversant l'appareil et l'on détermine, à partir des valeurs d'échauffement du gaz en fonction de la valeur du courant et pour diverses températures de référence, l'échauffement ($\Delta T$) du gaz au-dessus la température de référence, ces valeurs d'échauffement ayant été préalablement déterminées par des essais ou par un modèle mathématique,

c) on calcule la température du gaz (T) par addition de la température de référence ($T_{réf}$) et de l'échauffement ($\Delta T$),

d) on mesure la pression (P) du gaz à l'intérieur de l'appareil,

e) on calcule la masse volumique $\rho$ du gaz à partir des équations d'état $\rho = F(T, P)$ du gaz, qui sont des données tabulées.

Lorsque l'appareil est associé à un circuit comprenant des sectionneurs, il est possible de prévoir une correction de la valeur de l'échauffement ($\Delta T$) pour tenir compte de l'état ouvert ou fermé des sectionneurs.

On corrige la valeur de l'échauffement ($\Delta T$) pour tenir compte des conditions climatiques (vent, enneigement).

L'invention a également pour objet un dispositif pour la détermination de la masse volumique d'un gaz d'isolement d'un appareil électrique au voisinage des pièces parcourues par le courant, caractérisé en ce qu'il comprend:

- un capteur de température placé au voisinage de l'appareil et fournissant une température de référence ($T_{réf}$),
- un dispositif de mesure de l'intensité (IA, IB, IC) des courants dans l'appareil,
- des liaisons pour acheminer les valeurs de la température de référence ($T_{réf}$) et les valeurs (IA, IB, IC) des intensités vers un microprocesseur programmé pour fournir, en fonction de la valeur du courant et pour diverses températures de référence, l'échauffement ($\Delta T$) du gaz au-dessus la température de référence, ces valeurs d'échauffement ayant été préalablement déterminées par des essais ou par un modèle mathématique, le microprocesseur étant progammé pour additionner les valeurs de la température de référence ($T_{réf}$) et de l'échauffement ($\Delta T$) de manière à obtenir la valeur corrigée (T) de la température du gaz,
- un dispositif de mesure de la pression (P) du gaz de l'appareil,
- une liaison pour acheminer vers le microprocesseur la valeur (P) de la pression dans l'appareil, le microprocesseur étant programmé pour fournir la valeur ($\rho$) de la masse volumique du gaz à partir des équations d'état du gaz qui sont stockées dans une mémoire du microprocesseur,
- des moyens de signalisation et d'alarme commandés par le microprocesseur lorsque la valeur calculée de la masse volumique atteint en décroissant une ou plusieurs valeurs de seuil.

Facultativement, le dispositif comprend en outre une sonde thermique image de l'appareil et placée à proximité de ce dernier dont l'indication est fournie au microprocesseur pour appliquer une correction à la valeur calculée de la masse volumique.

Avantageusement, le microprocesseur est programmé pour inhiber les commandes d'alarme et de signalisation pendant une durée déterminée lorsque la valeur du courant croît brusquement d'une valeur donnée.

Le dispositif de mesure de pression est un capteur associé à un circuit électronique compensé en température.

En variante, le dispositif de mesure de pression est thermostaté.

Un exemple de mise en oeuvre du procédé est décrit en référence au dessin annexé dans lequel:

- la figure 1 est un schéma synoptique illustrant le procédé selon l'invention de détermination de la masse volumique du gaz, en une zone inaccessible de l'intérieur d'un appareil électrique,
- la figure 2 est une vue illustrant les variations d'échauffement du gaz en fonction des variations brusques de courant, mettant en évidence les constantes de temps thermiques des appareils,
- la figure 3 est une vue schématique du dispositif de mesure de la masse volumique du gaz d'isolement d'un disjoncteur conventionnel situé en plein air.

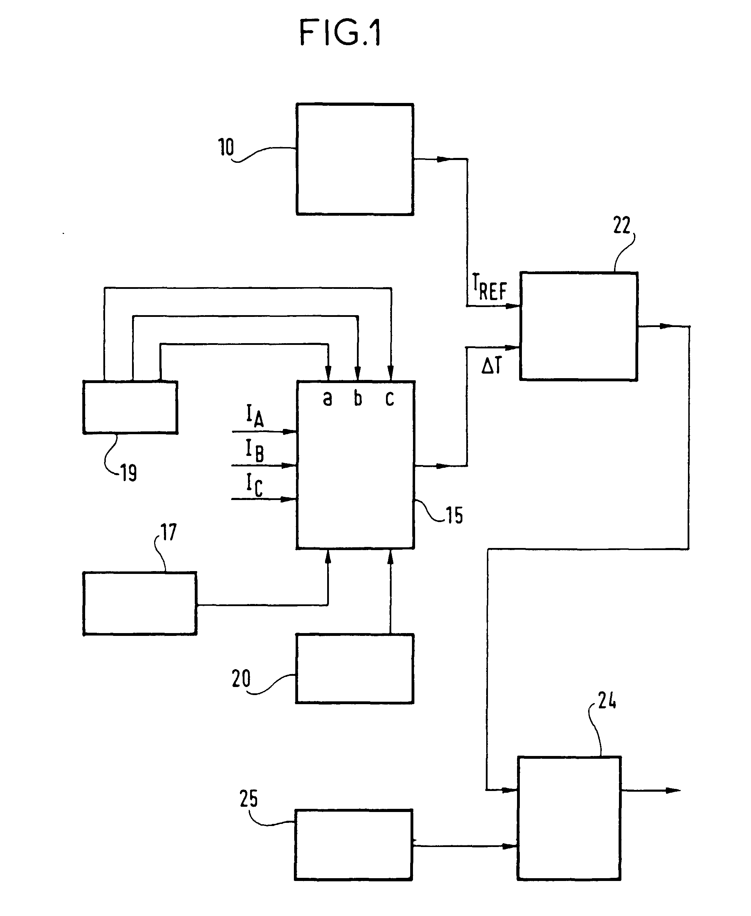

Dans la Fig. 1, la référence 10 désigne un organe de mesure de la température; comme il a déjà été indiqué, cet organe est placé le plus près possible du volume à surveiller (pour un appareillage de type blindé, l'organe de mesure de la température sera placé au voisinage de l'enveloppe métallique; pour un disjoncteur de type conventionnel sur colonnes isolantes, l'organe sera placé pour mesurer la température ambiante régnant autour des colonnes du disjoncteur, en général à la base des colonnes isolantes). On désignera dans la suite par $T_{réf}$ (température de référence) la température mesurée par l'organe 10.

La référence 15 désigne un microprocesseur programmé pour calculer l'échauffement $\Delta T$ du gaz, c'est à dire la différence entre la température régnant dans l'appareil au voisinage des conducteurs et la température de référence.

Le microprocesseur reçoit les valeurs IA, IB et IC des courants des diverses phases de l'appareil (si l'appareil est constitué de trois éléments monophasés identiques, une seule valeur de l'intensité est retenue, par exemple la plus élevée). Dans la mémoire du microprocesseur, il a été enregistré les valeurs de l'échauffement en fonction des valeurs du courant et ce, pour diverses valeurs de la température de référence. Ces valeurs d'échauffement sont obtenues, soit au moyen d'essais en usine de l'appareillage, soit au moyen d'un modèle mathématique.

La calcul de l'échauffement peut être encore amélioré en tenant compte de la position ouverte ou fermée des sectionneurs équipant l'appareilage, l'échauffement pouvant varier selon l'état des sectionneurs. Un capteur 19 fournit au microprocesseur l'état des divers sectionneurs a, b, c et le microprocesseur choisit parmi des tables de correction 20 celle qui correspond à l'état global de l'appareil.

La valeur $\Delta T$ de l'échauffement est adressé à un additionneur 22 qui effectue le calcul de la température T du gaz au sein de l'appareil, par simple addition de la température de référence $T_{réf}$ et de la valeur de l'échauffement $\Delta T$.

La valeur T est adressée à un microcalculateur 24 dans lequel sont tabulées en mémoire les fonctions d'état du gaz de l'appareil, sous la forme:

$$\rho = F\ (T,\ P)$$

Ces fonctions d'état sont bien connues et tabulées. (Voir en particulier: Equations Beattie, Bridgmann Döring, etc. qui tiennent compte en particulier du phénomène de liquéfaction).

La pression P est fournie par un organe de mesure de pression 25 relié à l'appareil à surveiller.

Le procédé peut être amélioré par la prise en compte de la constante de temps thermique de l'appareil.

En effet, l'application du courant dans les jeux de barres ou conducteurs de l'appareil se traduit par un échauffement dont la valeur d'équilibre n'est obtenue qu'après un certain délai à partir de l'instant d'établissement du courant. La durée de ce délai, ou constante de temps thermique, dépend de la température de référence.

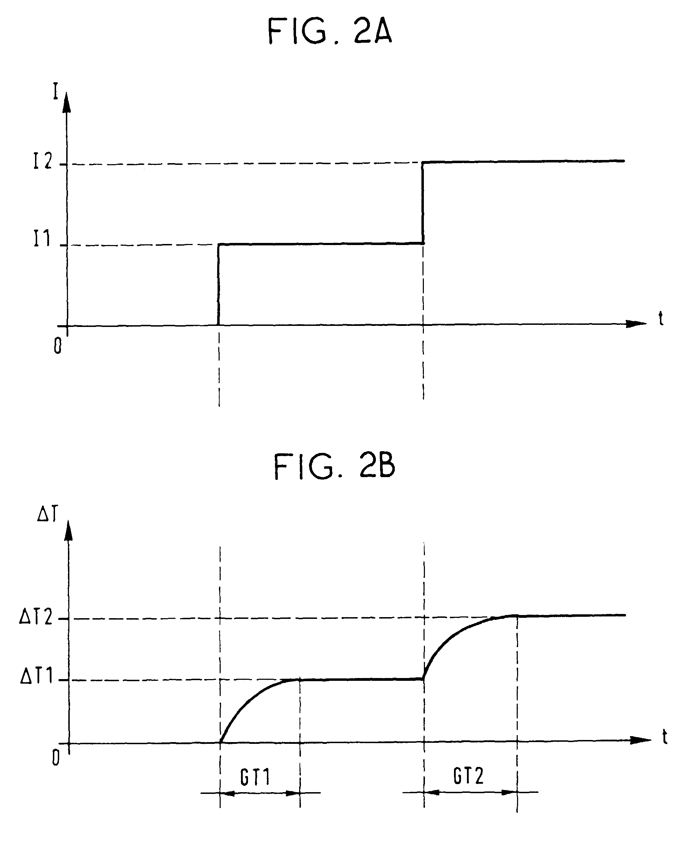

La figure 2A montre les variations du courant, passant d'une valeur 0 à une valeur I1, puis à une valeur I2: la courbe 2B montre l'allure de la courbe d'échauffement $\Delta T$ qui prend des valeurs successives $\Delta T1$ et $\Delta T2$ avec des constante de temps $G_{T1}$ et $G_{T2}$ fonction de l'écart de courant et de la température.

Si la température de référence est celle de l'enveloppe contenant le gaz (cas d'un poste blindé) la constante de temps est indépendante des conditions climatiques (vent, neige, etc...). Elle peut être prise en compte dans l'algorithme de correction, le calcul de l'échauffement faisant alors intervenir les variations temporelles lentes du courant.

Si la température de référence n'est pas celle de l'enveloppe, la constante de temps va dépendre des conditions climatiques; pour tenir compte de ce paramètre, un moyen préférentiel est d'utiliser une sonde 17, "image thermique" du volume à surveiller, dont la forme et le lieu d'installation lui confèrent une sensibilité aux intempéries identiques à celles du volume à surveiller. Le programme de calcul du microprocesseur 15 tient compte de l'information donnée par la sonde 17.

En variante, et pour éviter la mise en oeuvre de matériels complexes pour la mesure de conditions climatiques, une disposition de l'algorithme permet d'inhiber les commandes d'alarme et de verrouillage relatives au seuil programmé pendant une durée fonction de la constante de temps thermique, à la suite d'une variation significative du courant.

Une variation de courant est considérée comme significative si elle entraîne en régime établi une variation d'échauffement supérieure à celle nécessaire à la classe de précision demandée.

En général, l'appareil 25 fournissant l'information de pression P est un capteur électronique. La précision de cet appareil doit être compatible, pour toute la plage de température du gaz lors du fonctionnement de l'appareil, avec les objectifs de précision de mesure de la masse volumique du gaz.

Les capteurs de pression utilisés couramment nécessitent une correction qui peut être réalisée en munissant le capteur de pression d'un capteur de température pilotant un circuit de compensation.

Une variante, moins coûteuse, consiste à thermostater le capteur de pression au moyen d'une enveloppe thermiquement isolante contenant un ou plusieurs éléments chauffants auto-régulés, ou à équiper le transducteur constitué par le capteur de pression et son circuit électronique associé d'un dispositif de chauffage auto-régulé.

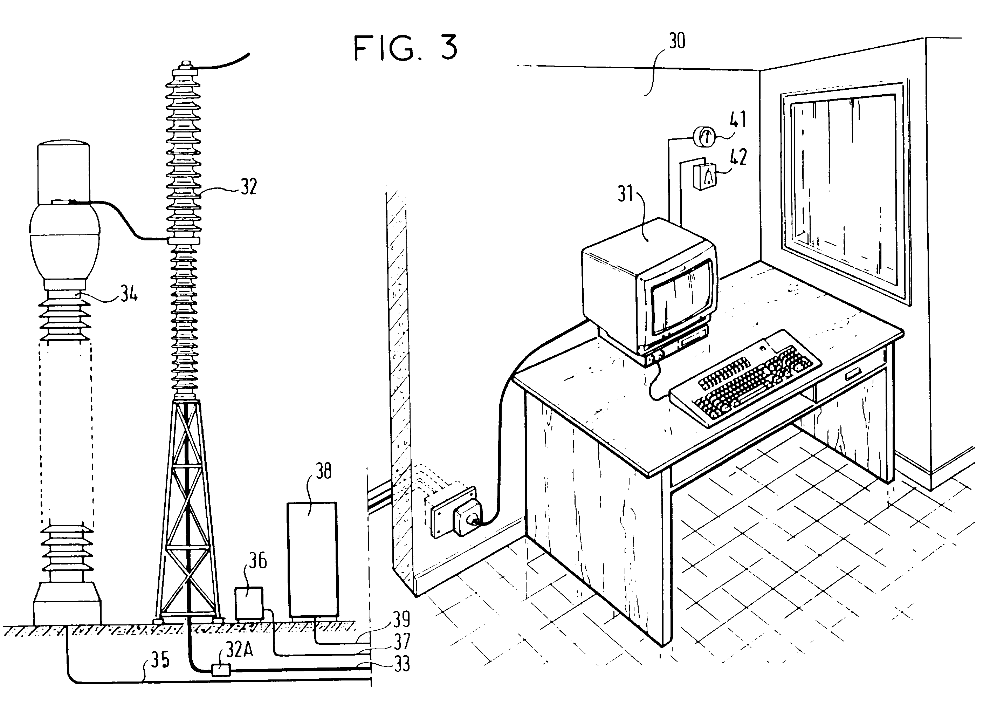

La figure 3 illustre un mode de mise en oeuvre du procédé de l'invention.

Dans un local 30 est placé un microprocesseur 31 programmé pour le calcul de l'échauffement $\Delta T$ à partir des valeurs de la température et du courant et pour le calcul de la masse volumique à partir de l'équation d'état du gaz.

Dans l'exemple de la Fig.3, l'appareil est un disjoncteur conventionnel à SF6, dont il a été représenté une phase 32.

Un capteur de pression 32A fournit au microprocesseur, par une liaison appropriée 33, la valeur de la pression P.

Un transformateur de courant 34 fournit par une liaison 35 la mesure du courant de la phase considérée.

Un dispositif de mesure de la température 36, placé au pied de la colonne du disjoncteur, fournit la valeur de la température de référence Tréf qui est acheminée par une liaison 37.

Enfin, une sonde 38, réalisant l'image thermique du disjoncteur et qui est disposée à son voisinage, fournit au microprocesseur une information sur les variations de conductivité thermique du disjoncteur; cette information est acheminée par une liaison 39.

Le dispositif est complété par des organes de signalisation et d'alarme, symbolisés par les pictogrammes 41 et 42.

## Revendications

1. Procédé pour déterminer la masse volumique d'un gaz d'isolement d'un appareil électrique au voisinage des pièces parcourues par le courant, caractérisé en ce qu'il comprend les étapes suivantes:

   a) on mesure une température de référence ($T_{réf}$) extérieure à l'appareil au voisinage de celui-ci,

   b) on mesure le courant (IA, IB, IC) traversant l'appareil et l'on détermine, à partir des valeurs d'échauffement du gaz en fonction de la valeur du courant et pour diverses températures de ré-

férence, l'échauffement ($\Delta T$) du gaz au-dessus la température de référence, ces valeurs d'échauffement ayant été préalablement déterminées par des essais ou par un modèle mathématique,

c) on calcule la température du gaz (T) par addition de la température de référence ($T_{réf}$) et de l'échauffement ($\Delta T$),

d) on mesure la pression (P) du gaz à l'intérieur de l'appareil,

e) on calcule la masse volumique $\rho$ du gaz à partir des équations d'état $\rho = F(T, P)$ du gaz, qui sont des données tabulées.

2. Procédé selon la revendication 1, caractérisé en ce qu'on corrige la valeur de l'échauffement ($\Delta T$) pour tenir compte de l'état ouvert ou fermé des sectionneurs disposés dans le circuit de l'appareil.

3. Procédé selon l'une des revendication 1 et 2, caractérisé en ce qu'on corrige la valeur de l'échauffement ($\Delta T$) pour tenir compte des conditions climatiques (vent, enneigement).

4. Dispositif pour la détermination de la masse volumique d'un gaz d'isolement d'un appareil électrique (32) au voisinage des pièces parcourues par le courant, caractérisé en ce qu'il comprend:

- un capteur de température (36) placé au voisinage de l'appareil et fournissant une température de référence ($T_{réf}$),
- un dispositif (34) de mesure de l'intensité (IA, IB, IC) des courants dans l'appareil,
- des liaisons (37, 35) pour acheminer les valeurs de la température de référence ($T_{réf}$ et les valeurs (IA, IB, IC) des intensités vers un microprocesseur (31) programmé pour fournir, en fonction de la valeur du courant et pour diverses températures de référence, l'échauffement ($\Delta T$) du gaz au-dessus la température de référence, ces valeurs d'échauffement ayant été préalablement déterminées par des essais ou par un modèle mathématique, le microprocesseur étant progammé pour additionner les valeurs de la température de référence ($T_{réf}$ et de l'échauffement ($\Delta T$) de manière à obtenir la valeur corrigée (T) de la température du gaz,
- un dispositif de mesure de la pression (P) du gaz de l'appareil,
- une liaison (33) pour acheminer vers le microprocesseur la valeur (P) de la pression dans l'appareil, le microprocesseur étant programmé pour fournir la valeur ($\rho$) de la masse volumique du gaz à partir des équations d'état du gaz qui sont stockées dans une mémoire du microprocesseur,
- des moyens de signalisation (41) et d'alarme (42) commandés par le microprocesseur lorsque la valeur calculée de la masse volumique atteint en décroissant une ou plusieurs valeurs de seuil.

5. Dispositif selon la revendication 4, caractérisé en ce qu'il comprend en outre une sonde (38) constituant une image de l'appareil et placée à proximité de ce dernier dont l'indication est fournie au microprocesseur pour appliquer, à la valeur calculée de la masse volumique, une correction complémentaire tenant compte des variations climatiques telles que le vent ou l'enneigement.

6. Dispositif selon l'une des revendications 4 et 5, caractérisé en ce que microprocesseur est programmé pour inhiber les commandes d'alarme (41) et de signalisation (42) pendant une durée déterminée lorsque la valeur du courant croît ou décroît brusquement d'une valeur donnée.

7. Dispositif selon l'une des revendications 4 à 6, caractérisé en ce que le dispositif de mesure de pression (32A) est un capteur associé à un circuit électronique compensé en température.

8. Dispositif selon l'une des revendications 4 à 6, caractérisé en ce que le dispositif de mesure de pression (32A) est thermostaté.

**Patentansprüche**

1. Verfahren zum Bestimmen der Dichte eines Isoliergases einer elektrischen Anlage in der Umgebung von stromdurchflossenen Teilen,

**dadurch gekennzeichnet, daß** es die folgenden Schritte aufweist:

a) man mißt eine Referenztemperatur ($T_{ref}$) außerhalb und in der Umgebung der Anlage,

b) man mißt den die Anlage durchströmenden elektrischen Strom (IA, IB, IC) und man bestimmt anhand der Werte der Gaserwärmung als Funktion des Stromwertes und für verschiedene Referenztemperaturen die Erwärmung ($\Delta T$) des Gases über die Referenztemperatur, wobei diese Werte für die Erwärmung zuvor durch Versuche oder über ein mathematisches Modell bestimmt wurden,

c) man berechnet die Temperatur (T) des Gases durch Addition der Referenztemperatur ($T_{ref}$) und der Erwärmung ($\Delta T$),

d) man mißt den Druck (P) des Gases im Innern der Anlage,

e) man berechnet die Dichte $\rho$ des Gases anhand von Zustandsgleichungen $\rho = F(T, P)$ des Gases, welche tabellierte Daten sind.

**2.** Verfahren nach Anspruch 1,
**dadurch gekennzeichnet, daß** man den Wert der Erwärmung (ΔT) korrigiert, um den offenen oder geschlossenen Zustand von im Stromkreis der Anlage angeordneten Trennschaltern zu berücksichtigen.

**3.** Verfahren nach einem der Ansprüche 1 und 2,
**dadurch gekennzeichnet, daß** man den Wert der Erwärmung (ΔT) korrigiert, um klimatische Bedingungen (Wind, Scheeverhältnisse) zu berücksichtigen.

**4.** Vorrichtung zur Besimmung der Dichte eines Isoliergases einer elektrischen Anlage (32) in der Umgebung von stromdurchflossenen Teilen,
**dadurch gekennzeichnet, daß** sie aufweist:

- einen in der Umgebung der Anlage angeordneten Temperaturaufnehmer (36), der eine Referenztemperatur ($T_{ref}$) liefert,
- eine Vorrichtung (34) zur Messung der Stromstärken (IA, IB, IC) in der Anlage,
- Verbindungen (37, 35) um die Werte der Referenztemperatur ($T_{ref}$) und die Werte der Stromstärken (IA, IB, IC) einem Mikroprozessor (31) zuzuführen, der programmiert ist, als Funktion der Stromwerte und für verschiedene Referenztemperaturen die Erwärmung des Gases (ΔT) über die Referenztemperatur zu liefern, wobei diese Werte für die Erwärmung zuvor durch Versuche oder über ein mathematisches Modell bestimmt wurden, und der Mikroprozessor programmiert ist, die Werte der Referenztemperatur ($T_{ref}$) und der Erwärmung (ΔT) zu addieren um so den korrigierten Wert (T) der Temperatur des Gases zu erhalten,
- eine Vorrichtung zur Messung des Gasdruckes (P) der Anlage,
- eine Verbindung (33) um dem Mikroprozessor den Druckwert (P) in der Anlage zuzuführen, wobei der Mikroprozessor programmiert ist, den Wert der Dichte (ρ) des Gases anhand der Gaszustandsgleichungen zu liefern, welche in einem Speicher des Mikroprozessors abgelegt sind,
- Signal- (41) und Alarmmittel (42), die durch den Mikroprozessor gesteuert werden, wenn der berechnete Wert der Dichte fallend einen oder mehrere Schwellenwerte erreicht.

**5.** Vorrichtung nach Anspruch 4,
**dadurch gekennzeichnet, daß** sie außerdem einen Fühler (38) aufweist, der ein Bild der Anlage zusammensetzt und in deren Umgebung angeordnet ist, wobei dessen Anzeige dem Mikroprozessor zugeführt wird, um an dem berechneten Dichtewert eine ergänzende Korrektur vorzunehmen, die klimatische Veränderungen, wie Wind oder Schneeverhältnisse, berücksichtigt.

**6.** Vorrichtung nach einem der Ansprüche 4 und 5,
**dadurch gekennzeichnet, daß** der Mikroprozessor programmiert ist, die Alarm- (41) und Signalsteuerungen (42) während einer bestimmten Zeitspanne zu unterdrücken, wenn der Stromwert plötzlich über einen gegebenen Wert hinaus wächst oder darunter fällt.

**7.** Vorrichtung nach einem der Ansprüche 4 bis 6,
**dadurch gekennzeichnet, daß** die Vorrichtung zur Druckmessung (32A) ein mit einem elektronischen Schaltkreis verbundener, temperaturausgeglichener Aufnehmer ist.

**8.** Vorrichtung nach einem der Ansprüche 4 bis 6,
**dadurch gekennzeichnet, daß** die Vorrichtung zur Druckmessung (32A) thermostabilisiert ist.

**Claims**

**1.** A method of determining the density of an insulating gas in electrical apparatus in the vicinity of parts carrying electrical current, the method being characterized in that it comprises the following steps:

a) a reference temperature ($T_{ref}$) is measured outside the apparatus and in the vicinity thereof;
b) the current ($I_A$, $I_B$, $I_C$) passing through the apparatus is measured, and the temperature rise (ΔT) of the gas above the reference temperature is determined on the basis of gas temperature rise values as a function of current values and of various reference temperatures, said temperature rise values having been previously determined by testing or by a mathematical model;
c) the gas temperature (T) is computed by adding the reference temperature ($T_{ref}$) and the temperature rise (ΔT);
d) the gas pressure (P) inside the apparatus is measured; and
e) the density ρ of the gas is computed on the basis of equations of state of the gas ρ = F(T, P) which equations are tabulated data.

**2.** A method according to claim 1, characterized in that the temperature rise value (ΔT) is corrected to take account of the open or closed state of section switches disposed in the same circuit as the apparatus.

**3.** A method according to claim 1 or 2, characterized in that the temperature rise value (ΔT) is corrected to take account of weather conditions (wind, snow).

4. A system for determining the density of an insulating gas in electrical apparatus (32) in the vicinity of parts conveying current, the system being characterized in that it comprises:

   a temperature sensor (36) placed in the vicinity of the apparatus and delivering a reference temperature ($T_{ref}$);
   a device (34) for measuring the currents ($I_A$, $I_B$, $I_C$) passing through the apparatus;
   links (37, 35) for conveying the reference temperature value ($T_{ref}$) and the current values ($I_A$, $I_B$, $I_C$) to a microprocessor (31) programmed to provide the temperature rise ($\Delta T$) of the gas above the reference temperature as a function of the current values and for various reference temperatures, such temperature rise values having been previously determined by tests or by a mathematical model, the microprocessor being programmed to add together the reference temperature ($T_{ref}$) and the temperature rise value ($\Delta T$) in such a manner as to obtain the corrected temperature value (T) of the gas;
   a device for measuring the pressure (P) of the gas in the apparatus;
   a link (33) for conveying the value (P) of the pressure in the apparatus to the microprocessor, the microprocessor being programmed to provide the value ($\rho$) of the density of the gas on the basis of the equations of state for the gas which are stored in a memory of the microprocessor; and
   signalling and alarm means (41, 42) operated by the microprocessor whenever the computed value for the density drops to one or more threshold values.

5. A system according to claim 4, characterized in that it further comprises a probe (38) constituting an image of the apparatus and placed in the vicinity thereof, with output therefrom being delivered to the microprocessor to apply an additional correction to the computed value of the density to take account of variations in weather such as wind or snow.

6. A system according to claim 4 or 5, characterized in that the microprocessor is programmed to inhibit the alarm and signalling commands (41, 42) for a predetermined length of time after a sudden increase or decrease in the current by a given amount.

7. A system according to any one of claims 4 to 6, characterized in that the pressure-measuring device (32A) is a sensor associated with a temperature-compensated electronic circuit.

8. A system according to any one of claims 4 to 6, characterized in that the pressure-measuring device (32A) is thermostatically controlled.

# FIG.1

## FIG. 2A

## FIG. 2B

# FIG. 3

EP 0 726 630 B1